# EUROPEAN PATENT APPLICATION

(11) **EP 4 797 491 A1**
(43) Date of publication of application: **26.08.2026**
(21) Application number: 24879138.6
(22) Date of filing: 18.10.2024
(51) Int. Cl.: H02J 7/02, H02J 7/00

(54) **CHARGING SYSTEM**

(30) Priority: 18.10.2023 CN 202311352769
(71) Applicant: Positec Power Tools (Suzhou) Co., Ltd., Suzhou, Jiangsu 215123 (CN)
(72) Inventor: HE, Jialong, Suzhou, Jiangsu 215123 (CN); LIN, Wei, Suzhou, Jiangsu 215123 (CN); WU, Hongbing, Suzhou, Jiangsu 215123 (CN)
(74) Representative: Kilburn & Strode LLP
(86) International application number: PCT/CN2024/125839
(87) International publication number: WO 2025/082498

(57) **Abstract**

The present application provides a charging system, the charging system comprises a charger and a charging cabinet; the charger comprises at least one charger charging interface, the charger charging interface being detachably connected to a battery pack, the charger is configured to control output of charging power to the charger charging interface; the charging cabinet is independent from the charger, comprising a charging cabinet body and a power input cable; the charging cabinet is connected to the charger by means of the power input cable; when the charger is connected to the charging cabinet, the charging cabinet obtains supply power through the charger charging interface, and outputs the supply power to a charging cabinet charging interface.

## Description

### TECHNICAL FIELD

The present application relates to a field of charging technology, and particularly relates to a charging system.

### BACKGROUND

With a development of technology, functions of power equipment have become increasingly sophisticated, and people use power equipment in more occasions and with higher frequency. In order to meet people's needs for portable power equipment, charging devices have emerged.

For example, when municipal companies or contractors receive business such as garden trimming from users, they need to dispatch work teams to carry specific numbers of battery packs and battery-powered electric tools to destinations to perform tasks according to actual work requirements. In order to ensure that sufficient power can be provided to guarantee a normal operation of electric tools and thus complete task execution, municipal companies or contractors need to charge battery packs of power equipment through charging systems. However, existing charging systems have limited numbers of battery packs that can be charged, cannot provide guarantees for carrying, storage, and charging safety of battery packs, have low safety, and poor flexibility.

Therefore, it is necessary to provide a charging system to solve these problems existing in the prior art.

### Summary

In view of this, an objective of the present application is to provide a charging cabinet and a charging system, which can improve charging safety and have high flexibility compared with the prior art.

The present application provides a charging system, comprising: a charger, comprising: at least one charger charging interface, the charger charging interface is detachably connected to a battery pack, the charger is configured to control output of charging power to the charger charging interface; a charging cabinet, independent from the charger, comprising: a charging cabinet body, comprising at least one charging cabinet charging interface, the charging cabinet charging interface is detachably connected to a battery pack; a power input cable, the charging cabinet is connected to the charger through the power input cable; when the charging cabinet is connected to the charger, the charging cabinet obtains supply power through the charger charging interface, and outputs the supply power to a charging cabinet charging interface.

In an embodiment, a first end of the power input cable is connected to the charging cabinet body, and a second end is detachably connected to the charger charging interface.

In an embodiment, the charger charging interface comprises a charger positive terminal, a charger negative terminal, and a charger communication terminal; the second end of the power input cable comprises a charging cabinet positive terminal, a charging cabinet negative terminal, and a charging cabinet communication terminal; when the second end of the power input cable is connected to the charger charging interface, the charging cabinet positive terminal is connected to the charger positive terminal, the charging cabinet negative terminal is connected to the charger negative terminal, and the charging cabinet communication terminal is connected to the charger communication terminal.

In an embodiment, the charger comprises a first communication protocol, the charger communicates with a battery pack connected to the charger charging interface using the first communication protocol, and controls output of supply power to a corresponding charger charging interface according to communication information; the charger communicates with the charging cabinet using the first communication protocol, and controls output of supply power to a corresponding charger charging interface according to communication information.

In an embodiment, the charger further comprises a second communication protocol, the charger communicates with a battery pack connected to the charger charging interface using the second communication protocol, and controls output of charging power to a corresponding charger charging interface according to communication information.

In an embodiment, the charging cabinet comprises a first management module, and the charger comprises a main control module; the first management module sends power consumption parameter information to the main control module, the power consumption parameter information characterizes a power consumption requirement of the charging cabinet; the main control module controls output of the supply power to the charger charging interface connected to the charging cabinet in response to the power consumption parameter information.

In an embodiment, the power consumption parameter information at least comprises a battery pack charging requirement parameter of a battery pack connected to the charging cabinet charging interface.

In an embodiment, the first management module is further configured to: obtain a battery pack parameter at the at least one charging cabinet charging interface, and determine a battery pack with a highest charging priority according to the battery pack parameter; determine the battery pack charging requirement parameter according to battery pack parameters of the battery pack with the highest charging priority.

In an embodiment, the charging cabinet comprises a first management module; the charging cabinet comprises a first power supply circuit and a second power supply circuit, a battery pack connected to the charging cabinet charging interface is connected to the first power supply circuit to provide power to the first management module, and the charger is connected to the second power supply circuit to provide power to the first management module; when the first management module starts up, the first power supply circuit provides power first, wherein a startup of the first management module characterizes that the first management module switches from a closed state to a working state; when the first management module obtains the supply power from the charger, the first management module switches to be provided with power by the second power supply circuit.

In an embodiment, the charging cabinet body further comprises a trigger, wherein the trigger conducts the first power supply circuit in response to an external actuation to start power supply to the first management module; the first management module is further configured to send an access signal to a connected charger.

In an embodiment, the charger establishes communication with the charging cabinet in response to the access signal, and controls provision of supply power to the charging cabinet based on communication information.

In an embodiment, the charger comprises a main control module and at least two charger charging interfaces, at least one of the charger charging interfaces is a bidirectional transmission interface, and is further configured to connect to a DC input power source to receive DC input power; the charger is further configured to when the main control module detects that at least one of the charger charging interfaces is connected to the DC input power source, the main control module outputs the DC input power to other of the charger charging interfaces.

In an embodiment, the charger further comprises a main control module, an input power interface and a charging circuit; the main control module is configured to output a power processing control signal to the charging circuit when detecting that an input power source is connected; the charging circuit processes a power source provided by the input power source according to a received power processing control signal to output charging power; the main control module is further configured to generate a charging control signal according to second electrical parameter information of the charger and first electrical parameter information of the charging cabinet, to control output of the charging power to the charger charging interface, and/or output of the charging power to the charging cabinet.

In an embodiment, the charging cabinet body comprises: a first housing, the first housing is configured as a box-shaped structure with an opening; a top cover, the top cover is movably connected to the first housing for opening and closing the opening; a power supply device, at least partially accommodated in the first housing, configured to output the charging power to the charging cabinet charging interface.

In an embodiment, the charging cabinet further comprises a first management module and a heating module, wherein the heating module is at least partially disposed in the first housing; the first management module is configured to: control the heating module to perform a heating operation in response to a condition that a temperature of the charging cabinet is lower than a preset charging low temperature lower limit threshold; and control the heating module to perform a stop heating operation in response to a condition that the temperature of the charging cabinet is higher than a preset charging low temperature upper limit threshold.

In an embodiment, the charging cabinet further comprises a first management module and a cooling module, the cooling module is at least partially disposed in the first housing; the first management module is configured to: control the cooling module to perform a cooling operation in response to a condition that a temperature of the charging cabinet is higher than a preset charging high temperature lower limit threshold; wherein the temperature of the charging cabinet comprises at least one of an ambient temperature inside the charging cabinet, a temperature of the battery pack, and a temperature of the first management module.

In an embodiment, the charging cabinet further comprises a locking module, the locking module is at least partially disposed on the top cover, configured to unlock and lock the top cover with the first housing.

In an embodiment, the charging system further comprises a wireless communication module; when the wireless communication module is disposed in the charger, the main control module is further configured to control at least one of the following: receiving a control instruction sent by a power equipment through the wireless communication module, and outputting a corresponding charging control signal according to the control instruction; receiving a program update instruction sent by the power equipment through the wireless communication module, and updating a program of the charger and/or the charging cabinet according to the program update instruction; and sending device parameter information of at least one of the battery pack, the charger and the charging cabinet to the power equipment through the wireless communication module.

In an embodiment, the charging cabinet comprises an accommodating chamber, and the charger is removably accommodated in the accommodating chamber.

In an embodiment, the charging system further comprises at least one second charging cabinet; the second charging cabinet is configured to connect to the charger charging interface and/or a charger output interface of the charger, or to connect to an output interface of the charging cabinet, to receive charging power provided by the charger; wherein the output interface of the charging cabinet at least comprises the charging cabinet charging interface.

In an embodiment, the charger charging interface is the same as or different from the charging cabinet charging interface.

In an embodiment, the charger further comprises at least one charger output interface, the charger output interface is disposed on a body of the charger, and the charger is further configured to output charging power to the charging cabinet through the charger charging interface and/or the charger output interface.

Compared with the prior art, in the charging system provided by the above embodiments of the present application, the charging cabinet can provide a plurality of expansion interfaces, and achieves functions of charging, storing, and mobile transportation for multiple battery packs, thereby meeting a requirement of providing required power for a day's work; when an input power source is connected from outside, each battery pack connected to the charging cabinet can be charged; and during a charging process, a temperature in the charging cabinet can also be controlled to be at a reasonable temperature suitable for battery pack charging, thereby improving charging efficiency as much as possible while reducing damage to battery packs to a certain extent.

The charger in the charging system provided by the present application can detachably connect to battery packs, and can also control output of charging power to charging cabinets and battery packs, which can improve charging safety while improving charging flexibility.

Compared with the prior art, in the charging system provided by the above embodiments of the present application, the charger can detachably connect to battery packs and can provide output of charging power to charging cabinets and battery packs, the charging cabinet can communicate with the charger in a communication manner of a battery pack, ensuring that power supply can be obtained from the charger, thereby achieving power extraction from the charger and charging battery packs inside the charging cabinet, meeting charging requirements for multiple battery packs. On one hand, the charging cabinet can fully charge multiple battery packs overnight, meeting a requirement for expanded charging, providing multiple power supply forms, and eliminating part of users' power consumption anxiety; on the other hand, the charging cabinet also ensures a working efficiency and a working stability of the charging cabinet, greatly improving user convenience and satisfaction.

Furthermore, the charging system of the present application can also accommodate battery packs or battery packs and chargers through the charging cabinet and charge the battery packs, thereby improving charging safety. The charger can detachably connect to battery packs, and the charger can control output of charging power to the charging cabinet and the charger charging interface, providing high charging flexibility. Therefore, the charging system of the present application can improve charging safety while improving charging flexibility.

### BRIEF DESCRIPTION OF THE DRAWINGS

In order to more clearly illustrate technical solutions of embodiments of the present application, drawings required in the embodiments will be briefly introduced below. It should be understood that the following drawings only show certain embodiments of the present application, and therefore should not be regarded as limitations on a scope. For those skilled in the art, other related drawings may also be obtained based on these drawings without creative work.
Figure 1 is a schematic diagram of a mechanical structure of a charging system provided by an embodiment of the present application.
Figure 2 is a schematic diagram of a mechanical structure of a charging system provided by an embodiment of the present application.
Figure 3 is a schematic diagram of a circuit structure of a charging cabinet provided by an embodiment of the present application.
Figure 4 is a schematic diagram of a terminal structure of a charger charging interface and a second end of a power input cable provided by an embodiment of the present application.
Figure 5 is a schematic diagram of a structure of a charging system provided by an embodiment of the present application.
Figure 6 is a schematic diagram of a structure of a charging system provided by an embodiment of the present application.

### DETAILED DESCRIPTION

Specific embodiments of the present application will be described in detail below with reference to drawings. Obviously, described embodiments are only some embodiments of the present application, rather than all embodiments. Based on a description of the present application, all other embodiments obtained by those skilled in the art without creative work fall within a protection scope of the present application.

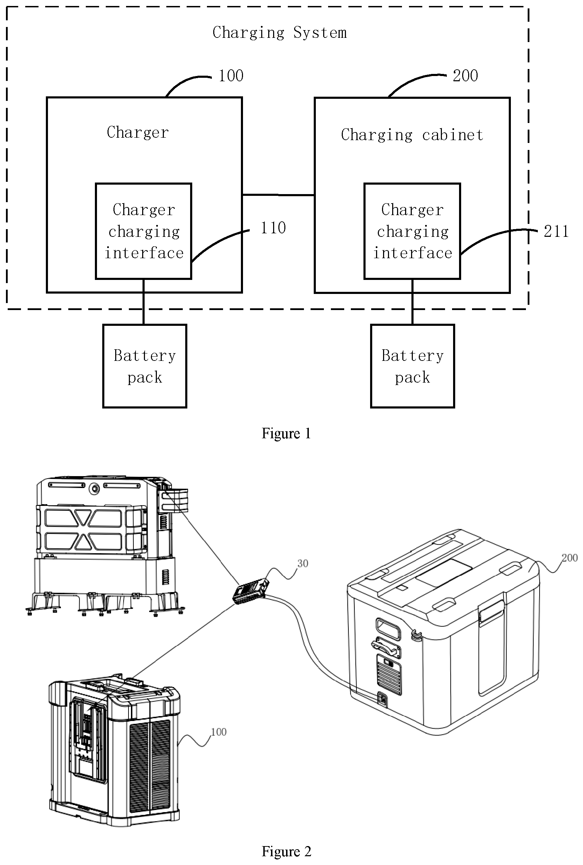

Referring to Figure 1, an embodiment of the present application provides a charging system 1, the charging system 1 comprises a charger 100, the charger 100 comprises at least one charger charging interface 110, the charger charging interface 110 is detachably connected to a battery pack, and the charger 100 controls output of supply power to the charger charging interface 110.

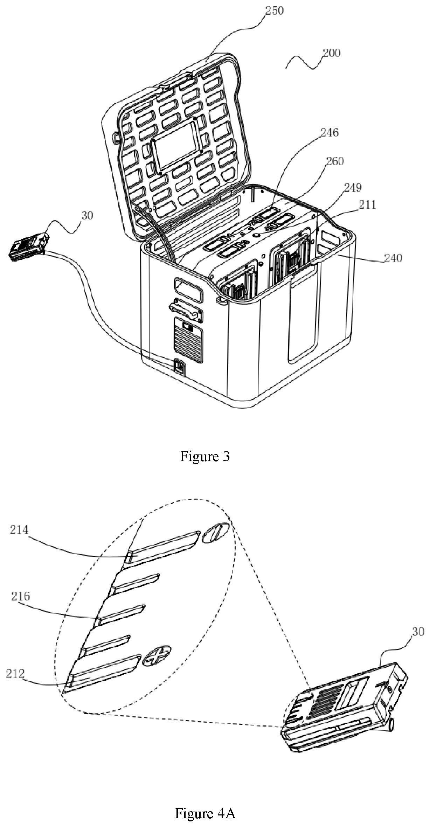

The charging system 1 further comprises a charging cabinet 200. The charging cabinet 200 and the charger 100 are two mutually independent devices. The charging cabinet 200 comprises a charging cabinet body 210 and a power input cable 220, and the charging cabinet 200 is connected to the charger 100 through the power input cable 220. Referring to Figures 2 and 3, the charging cabinet 200 comprises at least one charging cabinet charging interface 211 (four are shown in a figure, but the present application is not limited thereto), and the charging cabinet charging interface 211 is detachably connected to a battery pack. When the charging cabinet 200 is connected to the charger 100, the power input cable 220 is connected to the charger charging interface 110 of the charger 100, the charging cabinet 200 obtains supply power from the charger charging interface 110, and outputs the supply power to at least one charging cabinet charging interface 211 to charge battery packs connected to the at least one charging cabinet charging interface 211.

In the present embodiment, the charger charging interface 110 can connect to both a battery pack and the power input cable 220 of the charging cabinet 200. Specifically, when a user only needs to charge one or two battery packs, the battery packs are connected to the charger charging interface 110, and the charger 100 may control output of supply power to the charger charging interface 110 where the battery pack is located to charge a corresponding battery pack. When a user needs to charge multiple battery packs, due to a limitation of a number of charger charging interfaces on a single charger device, the user can only complete charging of all battery packs by timely replacing battery packs. In nighttime charging scenarios, this will bring great inconvenience to users and cannot meet a user's requirement of fully charging at once overnight. Therefore, a charging cabinet 200 with expanded charging interfaces may be selected. When a user connects the charging cabinet 200 to the charger charging interface 110 of the charger 100, the charger 100 may also control output of supply power to the charger charging interface 110 connected to the charging cabinet 200, so that the charging cabinet 200 uses the supply power to charge battery packs connected to the charging cabinet charging interface 211.

That is, the charger 100 can both charge battery packs and provide supply power to the charging cabinet 200 to charge battery packs connected to the charging cabinet charging interface 211 in the charging cabinet 200, accommodating diverse charging requirements and scenarios. Moreover, even if users have expanded charging requirements, such as a requirement to fully charge multiple battery packs overnight, users only need to purchase an additional charging cabinet without separately purchasing power supply devices specifically matched to the charging cabinet. Users may directly utilize existing chargers 100 to power the charging cabinet to achieve charging of multiple battery packs, which effectively improves a utilization efficiency of the charger 100 while reducing users' usage costs.

Preferably, the battery pack is an electric tool battery pack, and electric tools comprise garden tools, household tools, professional tools, etc. A type of battery pack connected to the charger charging interface 110 and a type of battery pack connected to the charging cabinet charging interface 211 may be the same or different. Different battery pack types mean that at least one parameter of the battery packs is different, such as one or more parameters among size, cell type, capacity, rated voltage, etc.

In an embodiment, the charger charging interface 110 and the charging cabinet charging interface 211 may be the same or different. Same interfaces mean that at least connection structures of the interfaces are the same. In the present embodiment, the charger 100 and the charging cabinet 200 are preferably charging devices of a same battery pack voltage platform, and need to match battery packs of a same series as much as possible. Therefore, a correspondingly configured charger charging interface 110 and charging cabinet charging interface 211 have at least a same connection structure.

In an embodiment, the charging cabinet 200 further comprises a first housing 240, a top cover 250 and a power supply device 260, the first housing 240 is configured as a box-shaped structure with an opening, as shown in Figure 3, an opening of the first housing 240 faces upward, when the top cover 250 is covered, the top cover 250 covers the opening together with the first housing 240, and forms an accommodating chamber with the first housing 240 to accommodate the power supply device 260. The power supply device 260 is at least partially accommodated in the first housing 240, optionally disposed at a middle position of the first housing, and configured to output supply power to each charging cabinet charging interface 211.

The charging cabinet charging interface 211 is disposed on single and/or bilateral sides of the power supply device 260, the charging cabinet charging interface 211 may be provided with a first mating structure and a second mating structure to connect to different types of battery packs respectively. The charging cabinet charging interface 211 is provided with an unlock button and an indicator light at corresponding positions of the power supply device 260, the unlock button is configured to remove a battery pack connected to the charging cabinet charging interface 211 when pressed, and the indicator light is configured to indicate a charging state of the charging cabinet 200 for the battery pack. The battery pack connected to the charging cabinet charging interface 211 comprises at least two different types of battery packs. The different types of battery packs refer to battery packs having at least one different parameter, for example, specifically one or more different among size, cell type, and capacity, such as two battery packs with a same cell type and capacity but different sizes, or two battery packs with a same cell type and size but different capacities, or two battery packs with a same size and capacity but different cell types.

In an embodiment, the charging cabinet 200 further comprises a pull rod 270 (not shown in a figure) for facilitating user transportation of the charging cabinet. Specifically, a groove is disposed on one side of the first housing 240, and the pull rod 270 is at least partially accommodated in the groove. The pull rod 270 may be configured as at least one of a foldable pull rod and a non-foldable pull rod. When the foldable pull rod is extended, the foldable pull rod at least partially extends from the groove, and when the foldable pull rod is folded, the foldable pull rod can be accommodated in the groove to reduce occupied space when not in use.

In an embodiment, the charging cabinet 200 further comprises rollers 280 (not shown in a figure) supported at a bottom of the charging cabinet 200, configured to cooperate with the pull rod 270 to transport the charging cabinet 200. When there is a requirement to transport the charging cabinet 200, the pull rod 270 is pushed and pulled to drive rolling of the rollers 280 at the bottom of the charging cabinet 200, thereby meeting a requirement of convenient transportation of the charging cabinet 270.

In an embodiment, a first end of the power input cable 220 is connected to the charging cabinet body 210, and a second end is detachably connected to the charger charging interface 110.

Specifically, the first end of the power input cable 220 is fixedly connected or detachably connected to the charging cabinet body 210, for example, the first end is fixed inside the charging cabinet body 210 by riveting, or the first end is directly fixed to the charging cabinet body 210 by integral injection molding, or the first end and the charging cabinet body are detachably connected to each other at a connection by matching male and female connectors. A specific connection method is not specifically limited here and may be designed based on actual requirements.

The second end of the power input cable 220 is detachably connected to the charger charging interface 110. A connection structure of the second end of the power input cable 220 cooperates with a structure of the charger charging interface 110 to achieve matching connection. In an embodiment, the second end is in a form of an adapter, and a connection structure of the adapter is the same as a connection structure of a battery pack that can be connected to the charger charging interface. Therefore, the charging cabinet 200 may directly connect to the charger charging interface 110 of the charger 100 through the second end of the power input cable 220 to obtain power supply from the charger 100, which improves system consistency and user convenience.

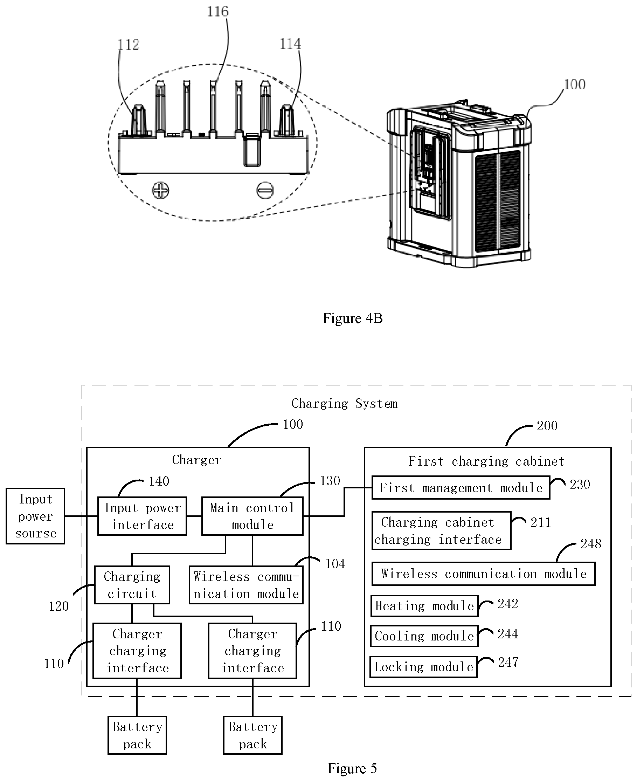

In an embodiment, as shown in Figures 4A and 4B, the charger charging interface 110 comprises a charger positive terminal 112, a charger negative terminal 114, and a charger communication terminal 116; the second end of the power input cable 220 comprises a charging cabinet positive terminal 222, a charging cabinet negative terminal 224, and a charging cabinet communication terminal 226; when the second end of the power input cable 220 is connected to the charger charging interface 110, the charging cabinet positive terminal 112 is correspondingly connected to the charger positive terminal 222, the charging cabinet negative terminal 114 is correspondingly connected to the charger negative terminal 224, and the charging cabinet communication terminal 114 is correspondingly connected to the charger communication terminal 224.

The charger positive terminal 112, the charger negative terminal 114, the charging cabinet positive terminal 222, and the charging cabinet negative terminal 224 are power terminals, configured for transmitting supply power between the charger 100 and the charging cabinet 200; the charger communication terminal 116 and the charging cabinet communication terminal 226 are communication terminals, configured for communication between the charger 100 and the charging cabinet 200. Of course, the charger charging interface 110 and/or the second end may also be provided with other communication terminals to be compatible with different connection devices, which is not specifically limited here.

In an embodiment, the charger 100 comprises a first communication protocol, the charger 100 communicates with a battery pack connected to the charger charging interface 110 using the first communication protocol, and controls output of supply power to a corresponding charger charging interface 110 according to communication information; the charger 100 communicates with the charging cabinet 200 using the first communication protocol, and controls output of supply power to a corresponding charger charging interface 110 according to communication information.

Specifically, the charger 100 stores at least a first communication protocol, and the battery pack supports at least a use of the first communication protocol to achieve communication between the charger 100 and the battery pack. The charger 100 controls output of supply power to the charger charging interface 110 where the battery pack is located based on communication information between the charger 100 and the battery pack to control charging of the battery pack. Since both the battery pack and the charging cabinet 200 are connected to the charger by connecting to the charger charging interface 110, the charger may use a same first communication protocol to communicate with devices connected from the charger charging interface 110, that is, the charger also communicates with the charging cabinet through the first communication protocol. Further, the charger 100 controls output of supply power to a corresponding charger charging interface 110 based on communication information to supply power to the charging cabinet 200.

It can be understood that the charger does not supply power to all devices connected to the charger charging interface 110. If a connected device does not match the charger or exceeds a power supply capability range of the charger, the charger will not output supply power to the charger charging interface 110. However, the charger almost never fails to output supply power to battery packs to be charged that are within an allowable charging range. Therefore, if the charging cabinet 200 intends to obtain supply power from the charger charging interface 110, the charging cabinet 200 may communicate with the charger as a battery pack with battery pack requirements. In one implementable way, the charging cabinet 200 may communicate with the charger 100 by following at least the first communication protocol supported by battery packs, thereby ensuring as much as possible that supply power can be obtained from the charger.

Of course, a way the charging cabinet 200 obtains power from the charger 100 is not limited to this. In another embodiment, interconnection with the charger may also be established through hardware circuit detection, hardware circuit detection combined with communication, and various other ways to obtain supply power.

In the present embodiment, the charger communicates with the charging cabinet by using the first communication protocol that communicates with battery packs, that is, the charging cabinet can communicate with the charger in a manner of a battery pack. This not only simplifies a communication logic between the charger and the charging cabinet, but also effectively avoids a situation where the charging cabinet is judged by the charger as a device that cannot be powered, ensuring that the charging cabinet can obtain supply power from the charger and improving system stability.

In an embodiment, the charger 100 further comprises a second communication protocol, the charger 100 communicates with a battery pack connected to the charger charging interface 110 using the second communication protocol, and controls output of charging power to a corresponding charger charging interface 110 according to communication information.

In order to match multiple types of battery packs, or to match battery packs compatible with multiple communication protocols, chargers can usually also store multiple communication protocols. That is, the charger also stores a second communication protocol that can communicate with battery packs, and controls output of supply power according to communication information. The second communication protocol is different from the first communication protocol.

For example, the battery pack is compatible with the first communication protocol and the second communication protocol, and the charger correspondingly supports the first communication protocol and the second communication protocol to communicate with the battery pack using at least one of the communication protocols. An advantage of this design is that when communication between the charger and the battery pack fails through either the first communication protocol or the second communication protocol, the charger may switch to use another communication protocol for communication, thereby avoiding usage limitations of the charger or battery pack caused by failures of a single communication method, which would affect user experience.

Of course, the charger 100 may also choose to use the first communication protocol and the second communication protocol to communicate with the charging cabinet. Generally speaking, communication terminals are usually used to communicate with a certain communication protocol. When multiple communication protocols need to be compatible, multiple sets of communication terminals are often required, which makes a structure more complex to a certain extent. Therefore, if the charging cabinet 200 intends to be compatible with two communication protocols, correspondingly, the charging cabinet needs to be provided with communication terminals respectively matching the first communication protocol and the second communication protocol. In the present embodiment, only the first communication protocol is used to communicate with the charger, which not only achieves requirements of communication and control, but also simplifies a design of the charging cabinet and reduces manufacturing costs.

In an embodiment, as shown in Figure 5, the charging cabinet 200 comprises a first management module 230, and the charger comprises a main control module 130; the first management module 230 sends power consumption parameter information to the main control module 130, wherein the power consumption parameter information characterizes a power consumption requirement of the charging cabinet 200; correspondingly, the main control module 130 controls output of supply power to the charger charging interface 110 connected to the charging cabinet 200 in response to the power consumption parameter information.

When the charging cabinet 200 and the charger 100 are in a connected state, the first management module 230 is correspondingly connected to the main control module 130, and transmits communication information through the charger communication terminal 116 and the charging cabinet communication terminal 226. The first management module 230 obtains the power consumption requirement of the charging cabinet 200, generates power consumption parameter information, and sends the power consumption parameter information to the main control module 130 through the above communication terminals to obtain required power from the charger 100. Correspondingly, the main control module 130 of the charger 100 receives the power consumption parameter information of the charging cabinet 200, matches supply power according to the power consumption parameter information and outputs the supply power to the charger charging interface 110 to supply power to the charging cabinet 200, thereby meeting the power consumption requirement of the charging cabinet 200.

In the present embodiment, the charging cabinet obtains supply power matching an actual power consumption requirement of the charging cabinet from the charger through a simplified method of active request, which not only improves a communication efficiency between both parties, but also largely avoids unnecessary power loss and improves power utilization.

In an embodiment, the power consumption parameter information at least comprises a battery pack charging requirement parameter of a battery pack connected to the charging cabinet charging interface 211.

It can be understood that a main function of the charging cabinet 200 is to charge connected battery packs, so a main power consumption requirement mainly comes from a charging requirement of battery packs. Therefore, the power consumption parameter information of the charging cabinet 200 at least comprises a charging requirement parameter of battery packs connected to at least one charging cabinet charging interface 211. The charging requirement parameter of the battery pack includes but is not limited to parameters such as charging voltage, charging current, charging power, charging temperature range, and charging protection threshold required by the battery pack.

Of course, the power consumption parameter information may also comprise other requirement parameters, that is, the charging cabinet 200 may also have other power consumption requirements, such as power supply for the first management module 230 and related control circuits, power supply for other functional modules such as heating modules, cooling modules, wireless communication modules, locking modules, etc. Power extraction methods for other power consumption requirements are not limited here.

In an embodiment, the first management module 230 is further configured to: obtain a battery pack parameter at at least one charging cabinet charging interface 211, and determine a battery pack with a highest charging priority according to the battery pack parameter; determine a battery pack charging requirement parameter according to battery pack parameters of the battery pack with the highest charging priority.

Considering that one charger charging interface 110 usually connects to only one battery pack, generally speaking, a charging power of the charger 100 can definitely meet a charging requirement of one matching battery pack, and can also make the battery pack in an optimal charging state, such as fast charging rate, best charging state, etc. In the present embodiment, what can be connected to the charger charging interface 110 may also be the charging cabinet 200, that is, an independent device capable of charging multiple battery packs.

When the charger charging interface 110 is connected to the charging cabinet 200, and multiple battery packs are connected in the charging cabinet 200, it is equivalent to connecting multiple battery packs to one charger charging interface 110 of the charger 100. In order to improve charging efficiency and avoid overload situations, usually one or a few battery packs among multiple battery packs are charged first, and other battery packs are charged after these battery packs are fully charged. Taking charging one battery pack each time as an example, the power consumption parameter information of the charging cabinet 200 is mainly a charging requirement parameter of the one battery pack that currently needs to be charged.

When multiple battery packs are simultaneously connected to the charging cabinet 200, it is necessary to prioritize the multiple battery packs according to battery pack parameters to determine which one or which few battery packs are currently being charged. The battery pack parameters at least comprise battery pack parameters including a parameter range allowing battery pack charging, a remaining capacity of the battery pack, a position order of the battery pack, etc. In one embodiment, the first management module 230 obtains battery pack parameters of multiple battery packs connected to multiple charging cabinet charging interfaces 211, screens out battery packs that are allowed to be charged according to the battery pack parameters, then determines one or several battery packs with a highest charging priority according to a position order of the battery packs, and determines battery pack parameters of the one or several battery packs as the battery pack charging requirement parameter, which is sent to the charger 100 as the power consumption parameter information of the charging cabinet 200 for request.

In the present embodiment, selecting the battery pack parameters of the battery pack with the highest charging priority as the power consumption parameter information can not only improve charging efficiency and prioritize fully charging battery packs in a shortest time, but also largely match a power supply request sent by the charging cabinet 200 with an actual power consumption requirement of the charging cabinet 200, effectively avoiding waste of power.

In an embodiment, the charging cabinet 200 comprises a first management module 230, the charging cabinet 200 further comprises a first power supply circuit 231 and a second power supply circuit 232, a battery pack connected to the charging cabinet charging interface 211 is connected to the first power supply circuit 231 to provide power to the first management module 230, and the charger 100 is connected to the second power supply circuit to provide power to the first management module 230; when the first management module 230 starts up, the first power supply circuit 231 first provides power to the first management module 230; when the first management module 230 obtains supply power from the charger 100, the first management module 230 switches to be provided with power by the second power supply circuit 232.

A startup of the first management module 230 refers to the first management module 230 switching from a completely powered-off closed state to an enabled working state. In this process, the first management module 230 is first powered by a battery pack connected to the charging cabinet charging interface 211.

It can be understood that the charging cabinet 200 itself is a passive device, and its power sources include an external charger 100 and battery packs connected to the charging cabinet charging interface 211. Therefore, the charging cabinet 200 is provided with a first power supply circuit and a second power supply circuit for the first management module 230 to respectively connect to a battery pack at the charging cabinet charging interface and the charger to obtain power supply. It can be understood that when the charging cabinet 200 just starts up and has not obtained power from the charger 100, since the charging cabinet 200 has no other power source, a power of a battery pack connected to the charging cabinet charging interface 211 may be temporarily used for providing power. However, the battery pack is inserted into the charging cabinet 200 mainly to be charged for user use, and power waste should be avoided as much as possible. Therefore, an actual power supply of the charging cabinet 200 should preferably be obtained from the charger 100. Therefore, once the first management module 230 detects that the charging cabinet 200 has obtained supply power from the charger 100, the first management module 230 will switch to be powered by the charger connected to the second power supply circuit to avoid further loss of battery pack power.

In an embodiment, the charging cabinet body is further provided with a trigger 240, the trigger 240 conducts the first power supply circuit 231 in response to an external actuation, that is, conducts a power supply circuit from the battery pack to the first management module 230, so that the first management module 230 starts up and enters a working state from a closed state. When the first management module 230 is powered, the first management module 230 needs to send an access signal to a connected charger to timely inform the charger 100 of an access state, so as to obtain power supply from the charger 100 as soon as possible.

For example, when a power of a battery pack connected to the charging cabinet charging interface 211 is used to temporarily provide power to the first management module 230, the first management module 230 first sends an access signal to the charger 100 to inform the charger. The charger establishes communication with the first management module 230 in response to the access signal. Further, the charger 100 matches supply power according to communication information with the first management module 230 and outputs the supply power to the charging cabinet 200 to obtain matching supply power from the charger 100. The access signal at least represents a connection state signal between the charging cabinet 200 and the charger 100.

In an embodiment, the charger 100 comprises a main control module 130 and at least two charger charging interfaces 110, at least one charger charging interface 110 is a bidirectional transmission interface, and is further configured to connect to a DC input power source to receive DC input power; when the main control module 130 detects that at least one charger charging interface is connected to the DC input power source, the main control module 130 outputs the DC input power to other charger charging interfaces.

A charger charging interface 110 of the charger may be designed as a bidirectional transmission interface, that is, the charger charging interface 110 can be used for both outputting power and inputting power. When the bidirectional transmission interface is connected to a DC input power source, the charger 100 controls conversion of an input DC input power into supply power and outputs the supply power to other charger charging interfaces 110 to supply power to corresponding devices.

The DC input power source may be energy storage power sources, battery packs, photovoltaic modules, car batteries, and other power sources. When users are in outdoor environments and cannot obtain alternating current, DC input power sources may also be used as power supply sources to timely supplement battery packs required by electric tools through the charger 100, which not only expands power supply forms but also alleviates users' power consumption anxiety.

In an embodiment, when the first management module 230 is powered by the first power supply circuit, if the first management module 230 determines that the charging cabinet 200 has no power consumption requirement, the first management module 230 powers off after a delay of a first preset time to reduce power loss. The first preset time may be set to 5 minutes. If the first management module 230 determines that the charging cabinet 200 has any power consumption requirement, the first management module 230 will maintain power supply by the battery pack and maintain for a second preset time. It can be understood that the charger 100 may be in a state of discharging to other charger charging interfaces. Even if the charging cabinet 200 informs the charger 100 of a connected state, the charger may currently be unable to immediately achieve to provide power to the charging cabinet 200.

Therefore, in practical applications, the charger 100 usually needs to wait until a work of other charger charging interfaces is at least partially completed before the charger 100 can provide power to the charging cabinet 200, that is, the charging cabinet 200 needs to wait for a period of time before the charging cabinet 200 may obtain power supply. Taking nighttime charging as an example, in order to avoid the charging cabinet 200 being unable to self-start, the charging cabinet 200 will maintain power supply to the first management module 230 for a period of time when a user controls startup of the first management module 230. Since only the first management module 230 is supplied with power, a power consumption is relatively small and at an acceptable level. Optionally, the first preset time is set to 10 hours, which can meet most nighttime charging time limitations.

In an embodiment, referring to Figure 5, the charging cabinet 200 further comprises a heating module 242, and the heating module 242 is at least partially disposed in the first housing 240. Specifically, heating modules 242 are distributedly disposed on an inner side of the first housing 240, and may be disposed on a side surface and/or a bottom surface of the first housing 240 to achieve temperature increase inside the charging cabinet 200. The heating module 242 includes multiple heating methods, such as directly heating air, heating heat sinks, etc. It can be understood that when the charging cabinet 200 works outdoors, or in cold winter, extremely low temperatures are not suitable for battery pack charging, and charging efficiency is extremely low. Therefore, it is necessary to provide a heating module 242 in the charging cabinet 200 to cope with adverse effects caused by low temperature environments.

Further, the charging cabinet 200 usually presets a charging low temperature lower limit threshold and a charging low temperature upper limit threshold, which may be implemented by software or hardware methods. Hardware methods such as using simple comparators or setting the above thresholds in hardware circuits, and software methods such as presetting the above thresholds in the first management module 230 and controlling whether to heat based on comparison results between the thresholds and actual temperature. Taking a software method as an example, the first management module 230 presets a charging low temperature lower limit threshold and a charging low temperature upper limit threshold, wherein the charging low temperature lower limit threshold is a lower limit condition for enabling the heating module, and the charging low temperature upper limit threshold is an upper limit condition for stopping the heating module. That is, when the first management module 230 determines that a detected real-time temperature of the charging cabinet 200 is lower than the charging low temperature lower limit threshold, the first management module 230 generates a heating instruction to the heating module 242, and the heating module 242 performs a heating operation in response to the heating instruction; when the first management module 230 determines that a detected real-time temperature of the charging cabinet 200 is higher than the charging low temperature upper limit threshold, the first management module 230 generates a stop heating instruction to the heating module 242, and the heating module 242 performs a stop heating operation in response to the stop heating instruction.

In an embodiment, the charging cabinet 200 is further provided with a heating fan for use with the heating module 242. When the heating module 242 is enabled, the heating module 242 may heat heat sinks on an inner side of a bottom of the first housing 240. In order to achieve temperature equilibrium in the accommodating chamber of the charging cabinet 200, heating fans are usually also used in combination, that is, when the heating module 242 performs a heating operation, the heating fan is simultaneously turned on to blow hot air from heated heat sinks to various parts in the accommodating chamber, thereby improving heating efficiency and effect.

In an embodiment, the charging cabinet 200 further comprises a cooling module 244, the cooling module 244 is at least partially disposed in the first housing 240 to avoid risks of low charging efficiency and safety hazards caused by excessively high ambient temperature, excessively high battery pack temperature during charging, or excessively high temperature of the charging cabinet itself. The cooling module 244 usually uses fans, and in order to improve a cooling effect, the cooling module 244 is usually disposed at a position close to the charging cabinet charging interface 211.

Similar to the heating module 242, usually at least a charging high temperature lower limit threshold is preset, which may be implemented by software or hardware methods. Hardware methods such as using simple comparators or setting the above threshold in hardware circuits, and software methods such as presetting the above threshold in the first management module 230 and controlling whether cooling is needed based on comparison results between the threshold and actual temperature. Taking a software method as an example, the first management module 230 presets a preset charging high temperature lower limit threshold, which is a lower limit condition for enabling a cooling module. That is, when the first management module 230 determines that a detected real-time temperature of the charging cabinet 200 is higher than the charging high temperature lower limit threshold, the first management module 230 generates a cooling instruction to the cooling module 244, and the cooling module 244 performs a cooling operation in response to the cooling instruction.

Of course, a stop cooling threshold may also be preset. For example, when the first management module 230 determines that a detected real-time temperature of the charging cabinet 200 is not higher than the stop cooling threshold, the first management module 230 generates a stop cooling instruction to the cooling module 244, and the cooling module 244 stops cooling in response to the stop cooling instruction.

In an embodiment, the cooling module 244 may also stop in response to an enabling of the heating module. That is, during a process of the cooling module 244 performing a cooling operation, if the first management module 230 generates a heating instruction, which indicates that cooling is no longer needed, a corresponding stop cooling instruction will be generated to stop an action of the cooling module. It can be understood that the cooling module 244 may perform a cooling operation in response to either a condition of an enabling of the heating module or reaching a preset charging high temperature lower limit threshold.

Wherein a temperature of the charging cabinet comprises at least one of an ambient temperature inside the charging cabinet, a temperature of the battery pack, and a temperature of the first management module.

In an embodiment, the cooling module 244 comprises at least one intake fan and at least one exhaust fan, wherein the intake fan is configured to draw external cool air into the charging cabinet 200, and the exhaust fan is configured to blow hot air inside the charging cabinet 200 out of the charging cabinet 200. When performing a cooling operation, both the intake fan and the exhaust fan may be started simultaneously.

Preferably, the heating module 242 and the cooling module 244 operate using power provided by the charger. In order to avoid power loss of battery packs to be charged in the charging cabinet 200, external power received from the charging cabinet 200 is preferentially used to provide power to each module.

In an embodiment, the charging cabinet further comprises a display module 246; the display module 246 may optionally be disposed on the top cover 250, or on the power supply device 260, or at any suitable position on the charging cabinet 200, which is not specifically limited here.

The display module 246 is configured to display at least one of the following: a connection state with the charger, a power state of the charger, a charging state of the charger for the charging cabinet, an access state or a charging state or a charging time of each charging cabinet charging interface in the charging cabinet, electrical parameters of battery packs connected to each charging cabinet charging interface, a continuous working duration of the charging cabinet or charger, date, temperature, communication state, cooling state, heating state. Specific display information is not limited thereto.

In an embodiment, the charging cabinet 200 further comprises a locking module 247, the locking module 247 is at least partially disposed on the top cover 250, configured to unlock and lock the top cover 250 with the first housing 240. Through the locking module, users may lock the charging cabinet 200 to provide anti-theft, rain-proof, fire-proof and other functions during a charging process.

In an embodiment, the locking module 247 comprises at least one of a mechanical locking method and an electrical locking method; the mechanical locking method usually comprises mechanical locks; the electrical locking method usually comprises electrically locked locks.

Specifically, when the locking module 247 uses the electrical locking method, the locking module 247 locks the top cover 250 of the charging cabinet with the first housing 240 in response to a received locking control signal sent by the first management module 230.

In an embodiment, the charging cabinet 200 may further comprise a wireless communication module 248 configured for wireless communication with external devices. For example, when the charging cabinet 200 establishes wireless communication with a user mobile device, a user may generate a locking instruction on the user mobile device and send the locking instruction to the charging cabinet 200, and the first management module 230 controls the locking module 248 to lock the top cover with the first housing based on the locking instruction.

In an embodiment, the charging cabinet 200 further comprises a trigger 249 configured to activate the charging cabinet 200, that is, to start to provide power to the first management module 230 for further charging work. When the trigger 249 is externally actuated, the charging cabinet 200 is activated while the display module 246 lights up. The trigger 249 may optionally be disposed on the power supply device 260, and may of course also be disposed at other suitable positions on the charging cabinet 200, which is not specifically limited here.

Specifically, in one implementation method, the trigger 249 can send an activation signal to the first management module 230 in response to an external actuation; the first management module 230 detects a power supply state of a charger connected to the charging cabinet 200 in response to the activation signal; correspondingly, when the first management module 230 determines that the power supply state indicates that the charger 100 allows output of charging power to the charging cabinet 200, the first management module 230 controls continuous output of a power supply signal to achieve power supply to the first management module 230; in an embodiment, considering that the charging cabinet 200 itself has no power storage, a power supply to the first management module 230 is first provided by one of battery packs on the charging cabinet 200. After the power supply is maintained for a certain time, in order to avoid unnecessary power loss of the battery pack, the power supply will be switched to be provided by the charger. When the first management module 230 determines that the power supply state indicates that the charger does not allow output of charging power to the charging cabinet 200, the first management module 230 controls stopping output of the power supply signal after a delay of a first preset time to disconnect power supply to the first management module 230.

In an embodiment, when the first management module 230 determines that all charging cabinet charging interfaces 211 have no charging requirement, the charging cabinet 200 malfunctions, or a continuous working duration of the charging cabinet 200 exceeds a second preset duration, the first management module 230 controls stopping output of a power supply signal to disconnect power supply to the first management module 230. That is, when the charging cabinet 200 encounters the above situations, charging does not need to continue or is not suitable to continue, then a charging operation is stopped to prevent unnecessary loss of fully charged battery pack power or to ensure charging safety of the charging cabinet.

In an embodiment, referring to Figure 2, the charger charging interface 110 is disposed on a side surface of the charger 100, and a same charger charging interface 110 may be provided with a first mating structure and a second mating structure to connect to different types of battery packs respectively. In an embodiment, battery packs connected to the charger 100 comprise at least two different types of battery packs. Different types of battery packs refer to battery packs having at least one different parameter, for example, specifically one or more different among size, cell type, and capacity, such as two battery packs with a same cell type and capacity but different sizes, or two battery packs with a same cell type and size but different capacities, or two battery packs with a same size and capacity but different cell types.

In an embodiment, the charger 100 may further comprise, but is not limited to, at least one charger output interface, the charger output interface is disposed on a body of the charger 100, and the charger 100 is further configured to output charging power to the charging cabinet 200 through the charger charging interface 110 and/or the charger output interface.

In an embodiment, the charging cabinet 200 may comprise at least two forms. One form is that an accommodating chamber of the charging cabinet 200 is provided with parts such as the power supply device as described above, and the charger cannot be disposed in the charging cabinet 200; another form is that the charging cabinet 200 comprises a second accommodating chamber, and the second accommodating chamber removably accommodates the charger 100. In an embodiment, the accommodating chamber may also removably accommodate battery packs connected to the charger charging interface 110, and/or battery packs connected to a charging cabinet charging interface of the charging cabinet 200. The battery packs connected to the charger charging interface 110 and the battery packs connected to the charging cabinet charging interface of the charging cabinet 200 may be a same type of battery packs or different types of battery packs. For example, the battery packs connected to the charger charging interface 110 and the battery packs connected to the charging cabinet charging interface of the charging cabinet 200 may be two types of battery packs with a same cell type and capacity but different sizes, or two types of battery packs with a same cell type and size but different capacities. Specifically, the battery packs connected to the charger charging interface 110 may be, for example, backpack-type battery packs. The battery packs connected to the charging cabinet charging interface of the charging cabinet 200 may be, for example, handheld battery packs, but the present application is not limited thereto.

Specifically, in an embodiment, the power input cable 220 comprises at least a method of connecting cables and adapters, that is, a charging cabinet 11 may achieve electrical connection with a charger 10 through cables only, or achieve electrical connection by using an adapter 30 to connect to a charging base of the charger 10. A cable may be disposed on a base of the charger 10, and an interface of the cable may be a general connector socket for converging cables. If the charging cabinet 11 uses an adapter to connect to the charger, then connector positions need to be provided at suitable positions on the base of the charger 10, or an adapter 30' having an interface form of a battery pack (such as a handheld battery pack) may be used to directly connect to a charger charging interface of the charger 10, so that the charging cabinet 11 may receive charging power provided by the charger 10 through the adapter.

In an embodiment, as shown in Figure 2, an input power source of the charging cabinet 200 is preferably a DC input power source. The DC input power source may include multiple forms, that is, the charger 100 has multiple forms, such as an AC-powered charger 10 providing a DC input power source after AC/DC conversion, a DC-powered charger providing a DC input power source to a charging cabinet 11, an energy storage device 20 powered by AC power supply and/or energy storage modules providing a DC input power source, DC power sources output by photovoltaic panels, car batteries, charging piles, generators, car engines, etc. The AC-powered charger is internally provided with an AC/DC module for converting AC power into DC power output to provide to the charging cabinet 11. If a DC-powered charger provides a DC input power source, the charger provides a DC input power source to the charging cabinet 11 after DC/DC conversion. If an energy storage device 20 provides a DC input power source, the energy storage device 20 may choose to use AC input converted to DC power to provide DC output, or choose to use power from energy storage modules to provide DC output to the charging cabinet according to actual conditions.

It should be noted that in one embodiment, regardless of a form of the charger, the charging cabinet 200 actively sends request information for power consumption requirements, and the charger matches and outputs supply power in response to power consumption requirements of the charging cabinet 200; that is, a charging parameter management of the charging cabinet 200 is controlled by the charging cabinet 200. In another embodiment, regardless of which DC input power source provides charging power, the charging cabinet 11 is controlled for charging by an actually connected charging device. That is, the charging device controls a specific charging process of the charging cabinet, and the charging cabinet 11 does not perform charging control for each charging cabinet charging interface, but only distributes power to each charging cabinet charging interface.

As shown in Figure 5, in an embodiment, the charger 100 further comprises an input power interface 140, a main control module 130 and a charging circuit 120. The main control module 130 is configured to output a power processing control signal to the charging circuit 120 when detecting that an input power source is connected. The charging circuit 120 processes a power source provided by the input power source according to a received power processing control signal to output charging power.

In an embodiment, the input power source at least comprises an AC input power source, and the charger 100 connects to the AC input power source from the input power interface 140. Furthermore, the input power source may also include, but is not limited to, a DC input power source, and the charger 100 may connect to the DC input power source from the input power interface 140.

In an embodiment, the charger 100 comprises at least two charger charging interfaces 110. The input power source comprises a DC input power source, and the charger 100 may connect to the DC input power source through a charger charging interface 110. The charger 100 is further configured to receive a DC input power source connected to one charger charging interface 110, and output charging power to the charging cabinet 200. Specifically, for example, a DC power source connected to one charger charging interface 110 may serve as a DC input power source to charge a charging cabinet 200 connected to the charger.

In an embodiment, continuing to refer to Figure 5, the charging cabinet 200 further comprises a first management module 230 disposed in the power supply device 260, the first management module 230 can establish a communication connection with the charger, send first electrical parameter information of a charging cabinet 11 to the charger, and receive communication information sent by the charger.

In the present embodiment, a supply power of the charging cabinet 200 is all provided by the charger, therefore it is necessary to send various parameters of the charging cabinet 200 itself, that is, first electrical parameter information, to the charger. The charger generates at least control instructions according to first electrical parameters of the charging cabinet 200 and according to its own parameters and sends the control instructions to the charging cabinet 200. The charging cabinet 200 receives communication information provided by the charger including various electrical parameters and control instructions of the charger, thereby being able to achieve management of the charging cabinet 200 based on this information.

It can be understood that in order to simplify a design of the charging cabinet 200, some charging management functions may be integrated into the charger 100, that is, at least the charger 100 determines power supply parameters output to the charging cabinet 200 and sends the power supply parameters to the charging cabinet 200 for execution, that is, the charger 100 controls part of a charging control of the charging cabinet 200.

Of course, the first management module 230 also performs part of the charging control. In an embodiment, the first management module 230 is further configured to control at least one of the following according to first electrical parameter information of the charging cabinet 230 itself and communication information sent by the charger: parameter collection of the charging cabinet, power distribution to each charging cabinet charging interface 211, dynamic monitoring of each charging cabinet charging interface 211, fault detection feedback and processing.

Specifically, to ensure normal operation of the charging cabinet 200, it is necessary to obtain various electrical parameters of the charging cabinet in real time for further management and control based on the various electrical parameters. When the charging cabinet 200 receives charging power from the charger, the charging cabinet 200 controls power distribution to each charging cabinet charging interface 211 according to a preset priority order, and monitors a charging state of each charging cabinet charging interface 211 in real time; throughout a charging process, the first management module 230 also needs to perform fault detection of various modules of the charging cabinet 200, as well as fault processing.

Optionally, the preset priority order at least comprises a position order of the charging cabinet charging interface 211, an insertion order of battery packs, a capacity order of battery packs from high to low or from low to high, a remaining power order of battery packs from high to low or from low to high, a charging time order of battery packs from long to short or from short to long, a charging rate order of battery packs from high to low or from low to high, a temperature order of battery packs from high to low or from low to high, etc., which may be specifically set according to requirements and is not specifically limited here. In particular, setting the priority order may also be remotely controlled using mobile terminals through wireless communication.

In an embodiment, the main control module 130 is further configured to generate a charging control signal according to second electrical parameter information of the charger 100 and first electrical parameter information of the charging cabinet 200, to control output of charging power to the charger charging interface 110, and/or output of charging power to the charging cabinet 200.

Specifically, in an embodiment, the first electrical parameter information comprises at least one of the following: a number of charging cabinet charging interfaces 211 of the charging cabinet 200, load requirement parameters of the charging cabinet charging interfaces 211 of the charging cabinet 200, safety parameters of the charging cabinet 200, fault thresholds of the charging cabinet 200. In an embodiment, the second electrical parameter information comprises at least one of the following: electrical parameters of the charger charging interface, charging capability parameters of the charger 100, safety parameters of the charger 100, fault thresholds of the charger 100.

In an embodiment, the first electrical parameter information may at least comprise parameters characterizing a load state of the charging cabinet, and the second electrical parameter information at least comprises parameters characterizing a load state of the charger charging interface. The charging control signal may at least comprise a charging priority signal; the main control module 130 is further configured to generate charging priority signals for the charger charging interface 110 and/or the charging cabinet according to parameters characterizing the load state of the charger charging interface and parameters characterizing the load state of the charging cabinet, to control the charging circuit to output charging power to the charger charging interface 110 and/or the charging cabinet (such as the charging cabinet 200) according to a charging priority.

The charging priority signal usually characterizes a preset priority order; the preset priority order at least comprises a position order of the charger charging interface 110 and the charging cabinet charging interface 211, an insertion order of battery packs, a capacity order of battery packs from high to low or from low to high, a remaining power order of battery packs from high to low or from low to high, a charging time order of battery packs from long to short or from short to long, a charging rate order of battery packs from high to low or from low to high, a temperature order of battery packs from high to low or from low to high, etc., which may be specifically set according to requirements and is not specifically limited here. In particular, setting the priority order may also be remotely controlled using mobile terminals through wireless communication.

In an embodiment, the main control module 130 may further be configured to, but is not limited to, control at least one of the following according to the first electrical parameter information and the second electrical parameter information: a charging mode of the charger 100, power output to each charger charging interface 110 of the charger 100, fault detection and processing of a charger 10 and/or a charging cabinet 11, etc.

Specifically, to ensure a coordinated normal operation of the charger 100 and the charging cabinet 200, it is necessary to obtain various electrical parameters of the charger 100 and the charging cabinet 200 in real time for further management and control based on the various electrical parameters. When the charger 100 and the charging cabinet 200 work coordinately, charging control is performed by the charger, that is, controlling at least one of a charging mode of the charger 100, power output to each charger charging interface 110 of the charger 100 and to the charging cabinet 200, fault detection and processing of the charger 100 and/or the charging cabinet 200.

In an embodiment, the charging system may further comprise a wireless communication module 248, and the wireless communication module 248 may optionally be disposed in the charger 100 or the charging cabinet 200. Taking the wireless communication module 248 being disposed in the charger 100 as an example, a main control module 120 is further configured to control at least one of the following: receiving a control instruction sent by a power equipment through a wireless communication module 120, and outputting a corresponding charging control signal according to the control instruction; receiving a program update instruction sent by the power equipment through the wireless communication module 248, and updating a program of the charger 100 and/or the charging cabinet 200 according to the program update instruction; and sending device parameter information of at least one of the battery pack, the charger 100 and the charging cabinet 200 to the power equipment through the wireless communication module 248.

It can be understood that when the charger 100 establishes wireless communication with power equipment through the wireless communication module 248, the charger 100 may also receive various function instructions such as display, locking, heating, cooling that can be controlled by the charger 100 and/or the charging cabinet 200 sent by the power equipment, to achieve remote control of a charging system operation.

The charger 100 in the charging system provided by the present embodiment can detachably connect to battery packs and can control output of charging power to the charging cabinet 200 and the charger charging interface 110. Therefore, devices to be charged such as battery packs can be protected through the charging cabinet 200, thereby improving charging safety. Moreover, devices to be charged such as battery packs may directly receive charging power provided by the charger 100 through the charger charging interface 110 of the charger 100, or may receive charging power provided by the charger 100 through the charging cabinet 200, providing high charging flexibility. The charging cabinet 200 does not need to separately provide a charging module, which reduces a volume and a cost of the charging cabinet 200, and also reduces unnecessary power loss during a charging process. Furthermore, the charging cabinet 200 expands a number of charging interfaces, enabling users to fully charge multiple battery packs at once without repeatedly replacing battery packs, to meet power requirements for a next day.

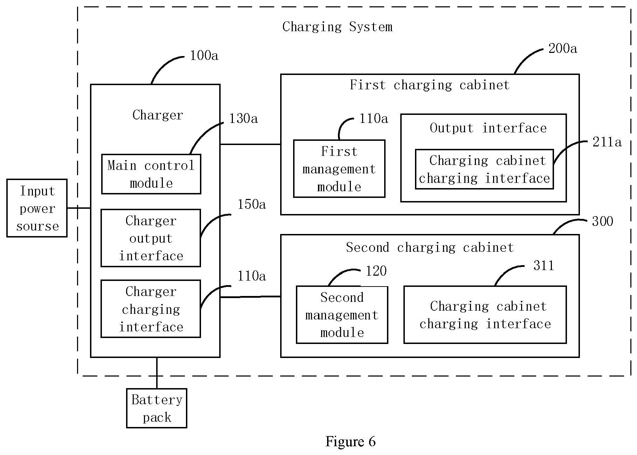

Figure 6 is a schematic diagram of a circuit structure of a charging system provided by another embodiment of the present application. Referring to Figure 6, the charging system comprises a charger 100a, a first charging cabinet 200a and at least one second charging cabinet 300 (only one is shown in Figure 6, but the present application is not limited thereto).

The charger 100a comprises a charger charging interface 110a and a main control module 130a. In an embodiment, the charger 100a may further comprise a charger output interface 150a.

In an embodiment, the first charging cabinet 200a comprises a first management module 230a and an output interface. An output interface of the first charging cabinet 200a at least comprises a charging cabinet charging interface 211a.

Specifically, a structure and/or a working principle of at least one of the charger charging interface 110a, the main control module 130a in the charger 100, the first management module 230a in the first charging cabinet 200a, and the charging cabinet charging interface 211a may refer to Figures 1-6 and corresponding descriptions, which will not be repeated here.

In an embodiment, the second charging cabinet 300 is configured to connect to the charger charging interface 110 and/or the charger output interface 150a of the charger 100a to receive charging power provided by the charger 100a. In other embodiments, the second charging cabinet 300 may also connect to, but is not limited to, an output interface of the first charging cabinet 200a to receive charging power provided by the charger 100a.

Specifically, in one embodiment, the first charging cabinet is connected to the charger, and the second charging cabinet is connected to the first charging cabinet, achieving two-level connection. The second charging cabinet 300 comprises a second management module 330, the second management module 330 is first temporarily powered by a battery pack connected inside the second charging cabinet 300 to achieve startup, and sends an access signal to the first charging cabinet 200a. The first management module 230a of the first charging cabinet 200a receives the access signal and establishes communication with the second management module 330. At this time, the first charging cabinet 200a is connected to the charger 100a in a same manner. When the first charging cabinet 200a obtains supply power from the charger 100a, if an access signal is received from the second charging cabinet 300, supply power is then output to each charging cabinet charging interface according to priority based on information of each charging cabinet charging interface connected to a charging cabinet 200a, including outputting supply power to the second charging cabinet 300. This achieves power supply by the charger 100a to multiple charging cabinets connected sequentially to charge multiple battery packs.

In another embodiment, the second charging cabinet 300 comprises a second management module 330. The second management module 330 is configured to establish a communication connection with the main control module 130a of the charger 100a to receive second electrical parameter information and charging control signals sent by the main control module 130a, and to send third electrical parameters of the second charging cabinet 300 to the main control module 130a or to the main control module 130a through the first management module 230a of the first charging cabinet 200a, and send corresponding charging control instructions to control a charging process of the second charging cabinet 300.

Specifically, in an embodiment, the second management module 330 is configured to control at least one of the following according to third electrical parameter information: parameter collection of the second charging cabinet 300, power distribution to each charging cabinet charging interfaces of the second charging cabinet 300, charging management work of the second charging cabinet 300, fault detection feedback and processing. Power distribution to charging cabinet charging interfaces corresponding to the first charging cabinet 200a and the second charging cabinet 300 are respectively implemented by their corresponding first management module 230a and second management module 330, which can improve an accuracy and a timeliness of power distribution management.

The charging system of the present embodiment comprises a charger 100a, a first charging cabinet 200a and at least one second charging cabinet 300. At least one charging cabinet 300 can be connected to an output interface of the first charging cabinet 200a, an interface of a charger 100a providing charging power, or can be directly connected to an interface of the charger 100a, to receive charging power provided by the charger 100a, which can further improve flexibility. Moreover, charging power for the first charging cabinet 200a and the second charging cabinet 300 can be uniformly provided by the charger 100a. Therefore, the first charging cabinet 200a and the second charging cabinet 300 do not need to be provided with corresponding charging circuits, thereby simplifying an electrical design of the first charging cabinet 200a and the second charging cabinet 300, avoiding redundancy of charging circuits, and further reducing a cost of the charging system. Furthermore,

The present application also provides a specific application of a charging system. As described in Figures 1-5, an embodiment of the present application provides a charging system 1, the charging system 1 comprises a charger 100 and a charging cabinet 200, the charger 100 is provided with a charger charging interface 110 configured to connect to a battery pack to output supply power to the charger charging interface 110, to charge the battery pack. The charging cabinet 200 comprises a charging cabinet body 210, and a power input cable 220, wherein one end of the power input cable is connected to the charging cabinet body 210, and another end is detachably connected to the charger charging interface 110, to output supply power output from the charger charging interface 110 to the charging cabinet body 210; at least one charging cabinet charging interface 211 is disposed inside the charging cabinet body 210, for connecting to battery packs, to charge the battery packs with supply power obtained by the charging cabinet.

When the second end of the power input cable 220 is connected to the charger charging interface 110, a charging cabinet positive terminal 222, a charging cabinet negative terminal 224, and a charging cabinet communication terminal 226 of the second end are respectively correspondingly connected to a charger positive terminal 112, a charger negative terminal 114, and a charger communication terminal 116 of the charger charging interface 110, to achieve communication and power transmission.

The charging cabinet 200 further comprises a first management module 230, a power supply circuit of the first management module 230 comprises a first power supply circuit and a second power supply circuit, wherein a battery pack connected to the charging cabinet charging interface 211 is connected to the first power supply circuit to provide power to the first management module 230, and the charger 100 is connected to the second power supply circuit to provide power to the first management module 230. The first management module 230 selects different power supply circuits when the first management module 230 is in different states.

The charger comprises a main control module 130. The charging cabinet 200 is provided with a trigger, configured to start the first management module 230. When the trigger is externally actuated, for example, when a user performs a startup operation, the first power supply circuit is conducted, and powered by battery packs in the charging cabinet, at this time the first management module 230 switches from a closed state to a working state, and sends an access signal characterizing an access state to the charger. Correspondingly, the main control module 130 of the charger 100 detects the access signal, and intends to establish communication with the charging cabinet 200.

When the charger 100 allows provision of supply power to the charger charging interface 110 where the charging cabinet 200 is located, the charger 100 establishes communication with the charging cabinet 200, and provides supply power.

Specifically, after the charging cabinet 200 establishes communication with the charger 100, the first management module 230 sends power consumption parameter information required by the charging cabinet 200 to the main control module, wherein the power consumption parameter information characterizes a power consumption requirement of the charging cabinet. For example, the power consumption parameter information at least comprises battery pack charging requirement parameters of battery packs connected to the charging cabinet charging interface 211. In response to the power consumption parameter information, the main control module 130 controls matching of supply power, and outputs the supply power through the charger charging interface 110 to the charging cabinet 200. Thus, the charging cabinet 200 obtains power supply from the charger 100.

Further, after the charging cabinet 200 obtains supply power from the charger charging interface 110, the charging cabinet 200 switches to using the second power supply circuit to provide power to the first management module 230, that is, switches to be powered by the charger 100, to reduce unnecessary power loss to battery packs.

When the charger 100 is temporarily unable to provide supply power to the charger charging interface 110 where the charging cabinet 200 is located, a first management module 230 of a charging cabinet 100 maintains power supply by the first power supply circuit, until supply power from the charger is obtained, or until a preset time is reached.

In the present embodiment, the charging cabinet 200 charges only one battery pack at a time, therefore, after the first management module 230 starts up, the first management module 230 detects a battery pack parameter of battery packs connected at each charging cabinet charging interface 211, screens out battery packs that are allowed to be charged according to the battery pack parameter, and selects a battery pack with a highest charging priority among the battery packs allowed to be charged according to a position order. It can be understood that a basis for determining priority is not only limited to this, and can be designed according to actual requirements, for example, determined according to battery pack parameters such as capacity, temperature, remaining power, etc.

When the charging cabinet 200 determines the battery pack with the highest charging priority, the charging cabinet 200 uses at least charging requirement parameters of the battery pack as power consumption parameter information of an entire charging cabinet 200, to communicate with the charger 100 using a first communication protocol. A battery pack and the charger 100 also communicate using at least the first communication protocol. That is, the charging cabinet 200 communicates with the charger 100 as a role of a battery pack, with a power consumption requirement and using a same communication protocol of the battery pack to obtain supply power. Therefore, the charger has no reason not to provide supply power for a battery pack with normal charging requirements, and thus also ensures that the charging cabinet 200 can obtain supply power from the charger 100.

When the charging cabinet 200 completes charging of the battery pack with the highest charging priority, the first management module 230 will determine a next battery pack to be charged as the battery pack with the highest charging priority, and send power consumption parameter information to the charger 100 with a same logic, to obtain matching supply power, thus, multiple battery packs in the charging cabinet 200 can be fully charged.

Before resting, a user inserts battery packs to be charged into the charging cabinet 200, and connects the charging cabinet 200 to a power source such as the charger 100, after starting the charging cabinet 200, the charging cabinet 200 can automatically complete power acquisition from the charger 100 and charging of battery packs according to the above logic, thereby being able to fully charge multiple battery packs overnight, without requiring the user to get up at night to operate, which greatly facilitates user use.

The above are only specific embodiments of the present application, but a protection scope of the present application is not limited thereto, any changes or substitutions that can be easily conceived by those skilled in the art within a technical scope disclosed by the present application should be covered within the protection scope of the present application. Therefore, the protection scope of the present application should be determined by appended claims.

## Claims

1. A charging system, comprising:
a charger, comprising: at least one charger charging interface, the charger charging interface is detachably connected to a battery pack, the charger is configured to control output of charging power to the charger charging interface;
a charging cabinet, wherein the charging cabinet and the charger are independent of each other, comprising:
a charging cabinet body, comprising at least one charging cabinet charging interface, the charging cabinet charging interface is detachably connected to a battery pack; and a power input cable, the charging cabinet is connected to the charger through the power input cable;
when the charging cabinet is connected to the charger, the charging cabinet obtains supply power through the charger charging interface, and outputs the supply power to the charging cabinet charging interface.

2. The charging system according to claim 1, wherein
a first end of the power input cable is connected to the charging cabinet body, and a second end is detachably connected to the charger charging interface.

3. The charging system according to any one of claims 1-2, wherein
the charger charging interface comprises a charger positive terminal, a charger negative terminal, and a charger communication terminal;
the second end of the power input cable comprises a charging cabinet positive terminal, a charging cabinet negative terminal, and a charging cabinet communication terminal;
when the second end of the power input cable is connected to the charger charging interface, the charging cabinet positive terminal is connected to the charger positive terminal, the charging cabinet negative terminal is connected to the charger negative terminal, and the charging cabinet communication terminal is connected to the charger communication terminal.

4. The charging system according to any one of claims 1-3, wherein
the charger comprises a first communication protocol, the charger communicates with a battery pack connected to the charger charging interface using the first communication protocol, and controls output of supply power to a corresponding charger charging interface according to communication information;
the charger communicates with the charging cabinet using the first communication protocol, and controls output of supply power to a corresponding charger charging interface according to communication information.

5. The charging system according to any one of claims 1-4, wherein
the charger further comprises a second communication protocol, the charger communicates with a battery pack connected to the charger charging interface using the second communication protocol, and controls output of charging power to a corresponding charger charging interface according to communication information.

6. The charging system according to any one of claims 1-5, wherein
the charging cabinet comprises a first management module, and the charger comprises a main control module;
the first management module sends power consumption parameter information to the main control module, the power consumption parameter information characterizes a power consumption requirement of the charging cabinet;
the main control module controls output of the supply power to the charger charging interface connected to the charging cabinet in response to the power consumption parameter information.

7. The charging system according to any one of claims 1-6, wherein
the power consumption parameter information at least comprises a battery pack charging requirement parameter of a battery pack connected to the charging cabinet charging interface.

8. The charging system according to any one of claims 1-7, wherein
the first management module is further configured to:
obtain a battery pack parameter at the at least one charging cabinet charging interface, and determine a battery pack with a highest charging priority according to the battery pack parameter;
determine the battery pack charging requirement parameter according to battery pack parameter of the battery pack with the highest charging priority.

9. The charging system according to any one of claims 1-8, wherein
the charging cabinet comprises a first management module;
the charging cabinet comprises a first power supply circuit and a second power supply circuit, a battery pack connected to the charging cabinet charging interface is connected to the first power supply circuit to provide power to the first management module, and the charger is connected to the second power supply circuit to provide power to the first management module;
when the first management module starts up, the first power supply circuit provides power first, wherein a startup of the first management module characterizes that the first management module switches from a closed state to a working state;
when the first management module obtains the supply power from the charger, the first management module switches to be provided with power by the second power supply circuit.

10. The charging system according to any one of claims 1-9, wherein
the charging cabinet body further comprises a trigger, wherein the trigger conducts the first power supply circuit in response to an external actuation to start power supply to the first management module;
the first management module is further configured to send an access signal to a connected charger.

11. The charging system according to any one of claims 1-10, wherein
the charger communicates with the charging cabinet in response to the access signal, and controls provision of supply power to the charging cabinet based on communication information.

12. The charging system according to any one of claims 1-11, wherein
the charger comprises a main control module and at least two charger charging interfaces, at least one of the charger charging interfaces is a bidirectional transmission interface, and is further configured to connect to a DC input power source to receive DC input power;
the charger is further configured to:
when the main control module detects that at least one of the charger charging interfaces is connected to the DC input power source, the main control module outputs the DC input power to other of the charger charging interfaces.

13. The charging system according to any one of claims 1-12, wherein
the charger further comprises a main control module, an input power interface and a charging circuit;
the main control module is configured to output a power processing control signal to the charging circuit when detecting that an input power source is connected;
the charging circuit processes a power source provided by the input power source according to a received power processing control signal to output charging power;
the main control module is further configured to generate a charging control signal according to second electrical parameter information of the charger and first electrical parameter information of the charging cabinet, to control output of the charging power to the charger charging interface, and/or output of the charging power to the charging cabinet.

14. The charging cabinet according to any one of claims 1-13, wherein
the charging cabinet body comprises:
a first housing, the first housing is configured as a box-shaped structure with an opening;
a top cover, the top cover is movably connected to the first housing for opening and closing the opening;
a power supply device, at least partially accommodated in the first housing, configured to output the charging power to the charging cabinet charging interface.

15. The charging cabinet according to any one of claims 1-14, wherein
the charging cabinet further comprises a first management module and a heating module, wherein the heating module is at least partially disposed in the first housing;
the first management module is configured to: control the heating module to perform a heating operation in response to a condition that a temperature of the charging cabinet is lower than a preset charging low temperature lower limit threshold; and control the heating module to perform a stop heating operation in response to a condition that the temperature of the charging cabinet is higher than a preset charging low temperature upper limit threshold.

16. The charging cabinet according to any one of claims 1-15, wherein
the charging cabinet further comprises a first management module and a cooling module, the cooling module is at least partially disposed in the first housing;
the first management module is configured to: control the cooling module to perform a cooling operation in response to a condition that a temperature of the charging cabinet is higher than a preset charging high temperature lower limit threshold;
wherein the temperature of the charging cabinet comprises at least one of an ambient temperature inside the charging cabinet, a temperature of the battery pack, and a temperature of the first management module.

17. The charging cabinet according to any one of claims 1-16, wherein
the charging cabinet further comprises a locking module, the locking module is at least partially disposed on the top cover, configured to unlock and lock the top cover with the first housing.

18. The charging system according to any one of claims 1-17, wherein
the charging system further comprises a wireless communication module;
when the wireless communication module is disposed in the charger, the main control module is further configured to control at least one of the following:
receiving a control instruction sent by a power equipment through the wireless communication module, and outputting a corresponding charging control signal according to the control instruction;
receiving a program update instruction sent by the power equipment through the wireless communication module, and updating a program of the charger and/or the charging cabinet according to the program update instruction;
sending device parameter information of at least one of the battery pack, the charger and the charging cabinet to the power equipment through the wireless communication module.

19. The charging system according to any one of claims 1-18, wherein
the charging cabinet comprises an accommodating chamber, and the charger is removably accommodated in the accommodating chamber.

20. The charging system according to any one of claims 1-19, wherein
the charging system further comprises at least one second charging cabinet;
the second charging cabinet is configured to connect to the charger charging interface and/or a charger output interface of the charger, or to connect to an output interface of the charging cabinet, to receive charging power provided by the charger;
wherein the output interface of the charging cabinet at least comprises the charging cabinet charging interface.

21. The charging system according to any one of the preceding claims, wherein
the charger charging interface is the same as or different from the charging cabinet charging interface.

22. The charging system according to any one of the preceding claims, wherein
the charger further comprises at least one charger output interface, the charger output interface is disposed on a body of the charger, and the charger is further configured to output charging power to the charging cabinet through the charger charging interface and/or the charger output interface.
